# EUROPÄISCHE PATENTSCHRIFT

(11) **EP 1 077 509 B1**
(45) Veröffentlichungstag und Bekanntmachung des Hinweises auf die Patenterteilung: **14.11.2007**
(21) Anmeldenummer: 00110760.6
(22) Anmeldetag: 19.05.2000
(51) Int. Cl.: H01R 9/26

(54) **Leiteranschluss für eine auf eine Hutschiene aufsetzbare Klemme**
Rail mounted terminal bloc
Connecteur pour rail électrique

(30) Priorität: 14.08.1999 DE 29914290 U
(43) Veröffentlichungstag der Anmeldung: 21.02.2001
(60) Teilanmeldung: 07116782.9
(73) Patentinhaber: Weidmüller Interface GmbH & Co., 32760 Detmold (DE)
(72) Erfinder: Böhm, Peter, 32832 Augustdorf (DE); Conrad, Horst, 32756 Detmold (DE); Horn, Dietmar, 32825 Blomberg (DE); Knoll, Michael, 33758 Schloss Holte (DE); Morgott, Jürgen, 33104 Paderborn (DE); Reker, Stefan, 33659 Bielefeld (DE); Strate, Klaus, 32758 Detmold (DE); Seipelt, Thorsten, 32760 Detmold (DE); Wilmes, Manfred, 32760 Detmold (DE)
(74) Vertreter: Dantz, Jan Henning

(56) Entgegenhaltungen:
- US-A- 4 220 392
- US-A- 4 269 471
- US-A- 4 776 815

## Beschreibung

Die Erfindung betrifft einen Leiteranschluß für eine auf eine Hutschiene aufsetzbare Klemme, insbesondere einen Leiteranschluß für eine auf eine Hutschiene aufsetzbare Schutzleiterklemme.

Aus der EP 0 491 123 B1 ist ein Leiteranschluß für eine auf eine Hutschiene aufrastbare Reihenklemme bekannt, der ein auf die Hutschiene aufsetzbares Stromschienenstück und eine damit zusammenwirkende Gegenlasche aufweist. Die Gegenlasche ist mittels einer Klemmschraube relativ zum Stromschienenstück beweglich und an dieser verklemmbar. Sie weist Haken auf; welche die Hutschienenschenkel untergreifen. Das Stromschienenstück und die Gegenlasche sind parallelbeweglich aneinander geführt. Leiteranschlüsse dieser Art sind insbesondere für Schutzleiterklemmen geeignet und dienen dort zum Anschluß des Schutzleiters und zur elektrischer Verbindung der Reihenklemmenanschlüsse mit der das Nullpotential führenden, als Tragschiene ausgebildeten Hutschiene.

Der gattungsgemäße Leiteranschluß ermöglicht zwar eine relativ zuverlässige Festlegung des Leiteranschlusses auf der Hutschiene. Wünschenswert ist jedoch eine stabilere Ausbildung des Leiteranschlusses bei gleichzeitiger Erhöhung der Kontaktsicherheit zwischen Stromschienenstück und Gegenlasche. Ebenfalls wünschenswert ist eine vereinfachte und verbesserte Handhabung des Leiteranschlusses und eine vereinfachte Führung des Stromschienenstückes an der Gegenlasche. Der Lösung dieser Probleme widmet sich die Erfindung.

Die Erfindung löst diese Probleme durch die Gegenstände der Ansprüche 1 und 2, welche wiederum in ihrer Kombination zu einer besonders vorteilhaften und verbesserten Ausführungform des Leiteranschlusses führen.

Die Erfindung realisiert zunächst einen Leiteranschluß für eine auf eine Hutschiene mit zwei Hutschienenschenkeln aufsetzbare Klemme, insbesondere einen Leiteranschluß für eine auf eine Hutschiene aufsetzbare Schutzleiterklemme, mit einem auf die Hutschiene aufsetzbaren Stromschienenstück und mit einer mit dem Stromschienenstück zusammenwirkenden Gegenlasche, welche Mittel wie Haken zum Untergreifen der Hutschienenschenkel aufweist, wobei das Stromschienenstück und die Gegenlasche parallelbeweglich aneinander geführt und an der Hutschiene festklemmbar sind. Dabei ist/sind ferner das Stromschienenstück und/oder die Gegenlasche in ihrem gemeinsamen Kontaktbereich mit einer Stufung versehen, so daß zwischen dem Stromschienenstück und der Gegenlasche in deren gemeinsamen Kontaktbereich jeweils eine flächige Auflage gebildet wird. Die Stufung - vorzugsweise Z-förmig - führt auf einfache Weise zu einer stabilen Ausbildung des Stromschienenstückes bei einer flächigen Kontaktierung der Gegenlasche durch das Stromschienenstück.

Nach einer bevorzugten Weiterbildung der Erfindung, die auch unabhängig vom Gegenstand des Anspruches 1 zu einer Weiterbildung des Leiteranschlusses führt, ist das Stromschienenstück in zwei seitlichen Kulissen der Gegenlasche geführt, welche geneigt zur Tragschiene ausgebildet sind, so daß das Stromschienenstück relativ zur Tragschiene in einfacher Weise von oben in die Kulissen der Gegenlasche einführbar ist und dort sicher geführt wird, ohne daß eigens für diesen Zweck bestimmte Ansätze am Stromschienenstück wie beim Stand der Technik in die Kulissen eingelenkt werden müßten.

Nach der Kombination der Ansprüche 1 und 2 wird bei einfachster Führung des Stromschienenstückes an der Gegenlasche eine besonders gute Kontaktierung zwischen dem Stromschienenstück und der Gegenlasche erreicht.

Weitere vorteilhafte Ausführungsformen der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
- Fig. 1: eine perspektivische Darstellung einer Schutzleiterklemme mit einem erfindungsgemäßen Leiteranschluß;
- Fig 2: eine Sprengansicht eines erfindungsgemäßen Leiteranschlußes;
- Fig. 3: eine weitere Sprengansicht des erfindungsgemäßen Leiteranschlußes aus Fig. 2.

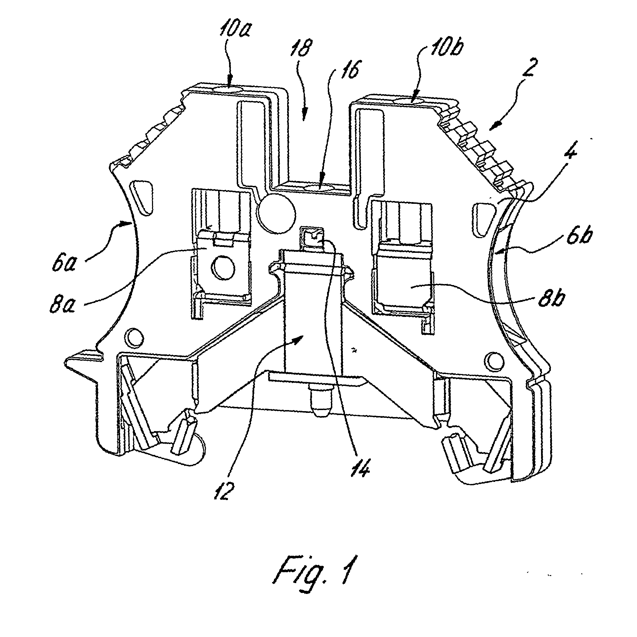

Fig. 1 zeigt eine Schutzleiterklemme 2 mit einem Klemmengehäuse 4 aus Kunststoff, welches zwei seitliche Öffnungen 6a, 6b zum Einführen externer (hier nicht dargestellter) Leiter in Klemmanschlüsse 8a, 8b aufweist, welche in diesem Fall als Schraubanschlüsse ausgelegt sind und mit Hilfe eines Schraubendrehers durch Schraubendreheröffnungen 10a,10b in der oberen Wandung des Klemmengehäuses 4 betätigbar sind.

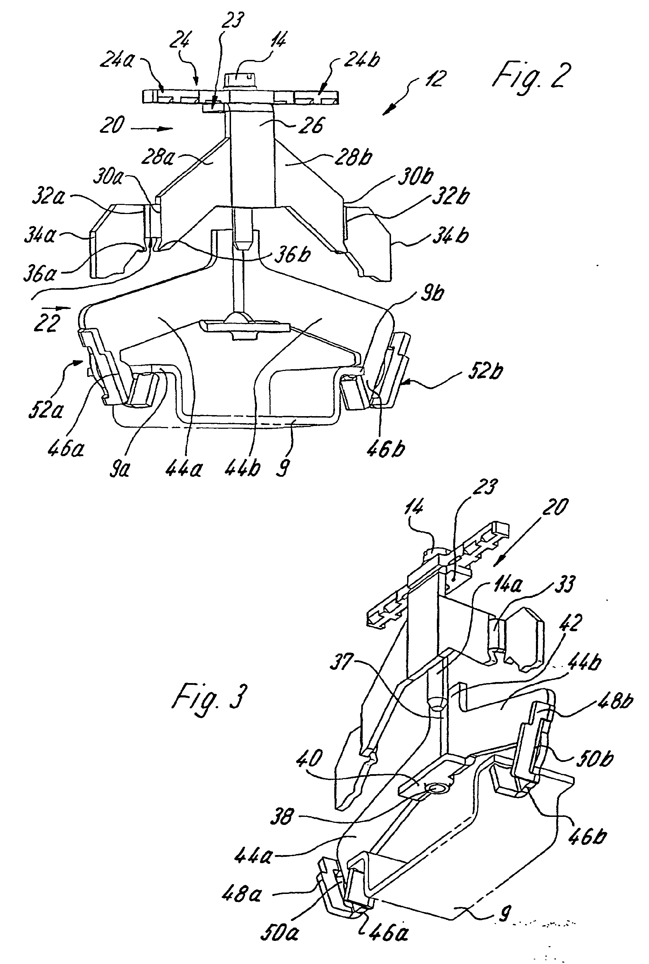

Zur Realisierung einer leitenden Verbindung der Klemmanschlüsse 8a, 8b mit einer Hutschiene/Tragschiene 9 mit zwei äußeren Hutschienenschenkeln 9a, 9b (siehe Fig. 2) und zum Verrasten der Schutzleiterklemme 2 auf der Hutschiene 9 dient ein Leiteranschluß 12 mit einer Klemmschraube 14, welche durch eine Öffnung 16 in einer oberen Ausnehmung 18 des Klemmengehäuses 4 mit einem Schraubendreher betätigt werden kann. Der genaue Aufbau des Leiteranschlusses ist aus Fig. 2 und 3 ersichtlich.

Der Leiteranschluß 12 besteht im wesentlichen aus einem Stromschienenstück 20, einer Gegenlasche 22 und der Klemmschraube 14.

Das Stromschienenstück 20 ist im wesentlichen als Blechbiegeteil ausgebildet und weist an seinem in Fig. 2 oberen - von der Hutschiene 9 abgewandten - Ende eine Abwinklung 23 und eine auf dieser Abwinklung 23 sitzende (oder einstückig angeformte) Anschlußschiene 24 auf, die zwei seitliche Schenkel 24a, 24b umfaßt, die jeweils zu den Klemmanschlüssen 8a,b geführt sind und den Leiteranschluß 12 mit den Klemmanschlüssen 8a,b leitend verbinden. In der Mitte der Anschlußschiene 24 ist eine Durchstecköffnung für die Klemmschraube 14 vorgesehen.

An die Abwinklung 23 formt sich nach unten hin ein Steg 26 an, an dessen beide äußere Längsseiten in der Ebene des Steges 26 seitliche Stromschienenschenkel 28a, 28b angeformt sind, die winklig zueinander in der Ebene des Steges 26 von diesem abstehen. In ihrem vom Steg 26 abgewandten Endbereich weisen die Stromschienenschenkel 28a,b eine erste Abwinklung 30a, 30b sowie eine zweite Abwinklung 32a, 32b auf, welche im wesentlichen jeweils einen Winkel von 90° beschreiben, so daß die Stromschienen 28a, b ihrer Seitenansicht eine Art Z-förmige Stufung 33 aufweisen. Die zweiten Abwinklungen 32a, 32b der Stromschienenschenkel 28a, 28b sind an ihren unteren, äußeren Enden mit einer senkrecht zur Tragschiene verlaufenden Außenkante 34a, 34b und Führungsschrägen 36a, 36b versehen. Die Nocken 36a, 36b dienen zur Kontaktierung der äußeren Hutschienenschenkel 9a, 9b von oben. Einer der Nocken, der Nocken 36a sitzt jeweils an den Stromschienenschenkeln 28. Der andere Nocken (36b) ist jeweils an den Abwinklungen 32 ausgebildet. Die Nocken 36 dienen der Kontaktierung der Tragschiene 9 von oben. Durch die Z-förmige Biegung werden die Nocken 36a, 36b seitlich zueinander versetzt, was die Stabilität der Klemmstelle deutlich erhöht.

Die Gegenlasche 22 ist ebenfalls als Blechbiegeteil ausgebildet, was insbesondere Fig. 3 verdeutlicht. Im Bereich oberhalb der Hutschiene 9 ist die Gegenlasche 22 parallel zum Stromschienenstück 20 und im wesentlichen senkrecht zur Hutschiene 9 ausgerichtet. Zwischen der Gegenlasche 22 und dem Stromschienenstück 24 liegt der Gewindebolzen 14a der Klemmschraube 14 in einer Führung 37 der Gegenlasche 22. Das untere, vom Bereich der Klemmanschlüsse 8a, b abgewandte Ende der Klemmschraube 14 ist in einer Öffnung 38 mit Innengewinde einer unteren Abwinklung 40 der Gegenlasche 22 verschraubbar. Durch Drehen der Klemmschraube 14 werden die Gegenlasche 22 und das Stromschienenstück 20 relativ zueinander parallel verschoben.

Auch die Gegenlasche 22 weist einen zentralen Steg 42 auf, der nach unten hin in der Abwinklung 40 endet und an dessen beide Längsseiten in der Ebene des Steges 42 seitliche Gegenlaschenschenkel 44a, 44b angeformt sind, die im wesentlichen parallel zu den Stromschienenschenkeln 28a, 28b des Stromschienenstückes 20 verlaufen. Die Gegenlaschenschenkel 44a, b sind jedoch nicht winklig bzw. Z-förmig gestuft ausgebildet sondern liegen im wesentlichen in einer einzigen Ebene. Die Gegenlaschenschenkel 44a,b und die Stromschienenschenkel 28a,b liegen zunächst beabstandet parallel zueinander und kontaktieren einander im Bereich der zu den Gegenlaschenschenkeln 44a,b ausgerichteten Abwinklungen 30, 32 bzw. der Z-förmigen Stufungen 33.

Durch die beiden in der Seitenansicht des Stromschienenstückes 20 Z-förmigen Stufungen 33 des Stromschienenstückes 20 im Bereich seiner Stromschienenschenkel 28 wird eine flächige Auflage und Kontaktierung zwischen dem Stromschienenstück 20 und der Gegenlasche 22 realisiert, welche im Vergleich zu einer eher undefinierten und linienartigeren Kontaktierung bei einer in der Seitenanschit eher V-förmigen Ausbildung des Stromschienenstückes bzw. seiner Schenkel nach Art des Standes der Technik eine höhere Stabilität und eine verbesserte Kontaktgabe bedeutet.

An die äußeren unteren Enden der Gegenlasche sind Haken 46a, 46b zum Untergreifen der Hutschienenschenkel 9a, 9b an die Gegenlaschenschenkel 44a, 44b angeformt. Diese Haken 46a, 46b weisen jeweils Abwinklungen 48a, 48b auf, welche geneigt zur Hut- bzw. Tragschienenebene schräg von außen nach innen sowie nach unten hin auf die Hutschienenschenkel 9a,9b zulaufen. Die Abwinklungen 48a, 48b sind mit Schlitzen 50a, 50b versehen, in welche die Abwinklungen 32a, 32b der Stromschienenschenkel 28a, 28b eingreifen. Die Abwinklungen 48a, b bilden daher mit ihren Schlitzen 50a, 50b jeweils Kulissen 52a, b für das Stromschienenstück 20 aus, welche geneigt bzw. schräg zur Hutschiene verlaufen. Ein besonderer Vorteil dieser geneigt ausgebildeten, V-förmig zueinander ausgerichteten Kulissen 52a, b ist darin zu sehen, daß es ohne weiteres möglich ist, das Stromschienenstück "von oben" in die Kulissen 52 einzuführen, was beim Stand der Technik mit seinen senkrecht zur Hutschiene 9 ausgerichteten Kulissen, in welche seitliche Ansätze der Stromschiene eingriffen, nicht möglich war. Darüberhinaus gewährleisten die Kulissen 52 stets eine definierte Führung des Stromschienenstückes 20 an der Gegenlasche 22. Optionale innere Abwinklungen 54 an den inneren Seiten der Haken 47a, 46b sorgen für einen stabilen Halt der Gegenlasche 22 an den Hutschienenschenkeln 9a, 9b und ebenfalls für eine verbesserte Kontaktierung der Hutschiene 9.

### Bezugszeichen

- Schutzleiterklemme: 2
- Klemmengehäuse: 4
- seitliche Öffnungen: 6a, 6b
- Klemmanschlüsse: 8a, 8b
- Hutschiene/Tragschiene: 9
- Hutschienenschenkel: 9a, 9b
- Leiteranschluß: 12
- Klemmschraube: 14
- Öffnung: 16
- Ausnehmung: 18
- Stromschienenstück: 20
- Gegenlasche: 22
- Abwinklung: 23
- Anschlußschiene: 24
- Schenkel: 24a, 24b
- Steg: 26
- Stromschienenschenkel: 28a, 28b
- erste Abwinklung: 30a, 30b
- zweite Abwinklung: 32a, 32b
- Stufung: 33
- Außenkanten: 34a, 34b
- Kontaktnocken: 36a, 36b
- Führung: 37
- Öffnung: 38
- Abwinklung: 40
- Steg: 42
- Gegenlaschenschenkel: 44a, 44b
- Haken: 46a, 46b
- Abwinklungen: 48a, 48b
- Schlitze: 50a, 50b
- Kulissen: 52a, b
- Abwinklungen: 54

## Patentansprüche

1. Leiteranschluß für eine auf eine Hutschiene (9) mit Hutschienenschenkeln (9a, 9b) aufsetzbare Klemme, insbesondere Leiteranschluß für eine auf eine Hutschiene (9) aufsetzbare Schutzleiterklemme (2), mit
a) einem auf die Hutschiene (9) aufsetzbaren Stromschienenstück (20);
b) einer mit dem Stromschienenstück (20) zusammenwirkenden Gegenlasche (22), welche Mittel (46) zum Untergreifen der Hutschienenschenkel (9a, 9b) aufweist,
c) wobei das Stromschienenstück (20) und die Gegenlasche (22) parallelbeweglich aneinander geführt und an der Hutschiene (9) festklemmbar sind,
**dadurch gekennzeichnet, daß**
d) das Stromschienenstück (20) und/oder die Gegenlasche (22) in ihrem gemeinsamen Kontaktbereich wenigstens eine Stufung (33) aufweisen, so daß zwischen dem Stromschienenstück (20) und der Gegenlasche (22) in deren gemeinsamen Kontaktbereich jeweils eine flächige Auflage gebildet wird.

2. Leiteranschluß nach Anspruch 1, **dadurch gekennzeichnet, daß** das Stromschienenstück (20) in wenigstens einer seitlichen Kulisse (52a, 52b) der Gegenlasche (22) geführt ist, welche geneigt zur Hutschiene ausgebildet ist, so daß das Stromschienenstück (20) relativ zur Hutschiene (9) von oben in die Kulissen (52) der Gegenlasche (22) einführbar ist.

3. Leiteranschluß nach Anspruch 1 oder 2, **dadurch gekennzeichnet, daß** die Stufungen (33) im wesentlichen Z-förmig ausgebildet sind.

4. Leiteranschluß nach einem der vorstehenden Ansprüche, **dadurch gekennzeichnet, daß** das Stromschienenstück (20) eine Abwinklung (23) und eine an diese angesetzte oder angeformte Anschlußschiene (24) aufweist.

5. Leiteranschluß nach einem der vorstehenden Ansprüche, **dadurch gekennzeichnet, daß** das Stromschienenstück (20) einen zentralen Steg (26) aufweist, an den zwei äußere Stromschienenschenkel (28a, 28b) angeformt sind.

6. Leiteranschluß nach einem der vorstehenden Ansprüche, **dadurch gekennzeichnet, daß** die Stromschienenschenkel (28a, b) die Z-förmigen Stufungen (33) aufweisen.

7. Leiteranschluß nach einem der vorstehenden Ansprüche, **dadurch gekennzeichnet, daß** die Gegenlasche (22) einen zentralen Steg (42) aufweist, an den seitliche Gegenlaschenschenkel (44a, 44b) angeformt sind, die im wesentlichen parallel zu den Stromschienenschenkeln (28a, 28b) des Stromschienenstückes (20) verlaufen.

8. Leiteranschluß nach einem der vorstehenden Ansprüche, **dadurch gekennzeichnet, daß** die Gegenlaschenschenkel (44a,b) und die Stromschienenschenkel (28a,b) wenigstens abschnittsweise beabstandet parallel zueinander liegen und einander im Bereich der Stufungen (33) kontaktieren.

9. Leiteranschluß nach einem der vorstehenden Ansprüche, **dadurch gekennzeichnet, daß** zwei der Kulissen (52) vorgesehen sind, die jeweils Abwinklungen (48a, 48b) aufweisen, welche geneigt zur Tragschienenebene ausgerichtet und mit Schlitzen (50a, 50b) versehen sind, in welche die Stromschienenschenkel (28a, 28b) eingreifen.

10. Leiteranschluß nach einem der vorstehenden Ansprüche, **dadurch gekennzeichnet, daß** das Stromschienenstück (20) und oder die Gegenlasche (22) im wesentlichen als Blechbiegeteile ausgebildet ist/sind.

11. Leiteranschluß nach einem der vorstehenden Ansprüche, **dadurch gekennzeichnet**, die Stromschienenschenkel (28) und die Abwinklungen (32) jeweils mit zueinander ausgerichteten Kontaktnocken (36a, 36b) versehen sind.

## Claims

1. Conductor connection for a terminal designed for mounting on a snap-on rail (9) with snap-on rail legs (9a, 9b), in particular conductor connection for an earthing terminal (2) designed for mounting on a snap-on rail (9), with
a) a bus bar section (20) designed for mounting on the snap-on rail (9),
b) a mating link (22) acting together with the bus bar section (20) and provided with means (46) for engaging the snap-on rail legs (9a, 9b) from below,
c) wherein the bus bar section (20) and the mating link (22) are guided along one another for parallel movement and can be clamped to the snap-on rail (9),
**characterised in that**
d) the bus bar section (20) and/or the mating link (22) have/has at least one step (33) in their/its joint contact area, resulting in a flat contact between the bus bar section (20) and the mating link (22) in their joint contact area.

2. Conductor connection according to claim 1, **characterised in that** the bus bar section (20) is guided in at least one lateral gate (52a, 52b) of the mating link (22), which is inclined relative to the snap-on rail, so that the bus bar section (20) can be inserted into the gates (52) of the mating link (22) from above.

3. Conductor connection according to claim 1 or 2, **characterised in that** the steps (33) are substantially Z-shaped.

4. Conductor connection according to any of the preceding claims, **characterised in that** the bus bar section (20) has an offset (23) and a connecting rail (24) mounted thereon or integral therewith.

5. Conductor connection according to any of the preceding claims, **characterised in that** the bus bar section (20) has a central web (26) with two integral outer bus bar legs (28a, 28b).

6. Conductor connection according to any of the preceding claims, **characterised in that** the bus bar legs (28a, b) are provided with the Z-shaped steps (33).

7. Conductor connection according to any of the preceding claims, **characterised in that** the mating link (22) has a central web (42) with two integral lateral mating link legs (44a, 44b), which extend substantially parallel to the bus bar legs (28a, 28b) of the bus bar section (20).

8. Conductor connection according to any of the preceding claims, **characterised in that** at least sections of the mating link legs (44a, b) and the bus bar legs (28a, b) extend at a distance and parallel to one another, contacting one another in the region of the steps (33).

9. Conductor connection according to any of the preceding claims, **characterised in that** two of the gates (52) are provided with offsets (48a, 48b), which are inclined relative to the support rail plane and have slots (50a, 50b) designed for engagement with the bus bar legs (28a, 28b).

10. Conductor connection according to any of the preceding claims, **characterised in that** the bus bar section (20) and/or the mating link (22) are/is substantially designed as bent sheet metal parts.

11. Conductor connection according to any of the preceding claims, **characterised in that** the bus bar legs (28) and the offsets (32) are each provided with contact breaker cams (36a, 36b) oriented towards one another.

## Revendications

1. Connecteur pour une borne de connexion pouvant être posée sur un profilé chapeau (9) avec des branches de profilé chapeau (9a, 9b), en particulier connecteur pour une borne de conducteur de protection (2) pouvant être posée sur un profilé chapeau (9), avec
a) une portion de barre conductrice (20) pouvant être posée sur le profilé chapeau (9) ;
b) une contre-barre de liaison (22) coopérant avec la portion de barre conductrice (20) qui comprend des moyens (46) de saisie par-dessous des branches de profilé chapeau (9a, 9b),
c) moyennant quoi la portion de barre conductrice (20) et la contre-barre de liaison (22) sont dirigées parallèlement l'une à l'autre de façon mobile et peuvent être bloquées sur le profilé chapeau (9),
**caractérisé en ce que**
d) la portion de barre conductrice (20) et/ou la contre-barre de liaison (22) comportent dans leur zone de contact commune au moins un palier (33), de sorte qu'entre la portion de barre conductrice (20) et la contre-barre de liaison (22) est formé respectivement un appui plan dans leur zone de contact commune.

2. Connecteur selon la revendication 1, **caractérisé en ce que** la portion de barre conductrice (20) est dirigée dans au moins une coulisse latérale (52a, 52b) de la contre-barre de liaison (22), laquelle est configurée inclinée par rapport au profilé chapeau (9), de sorte que la portion de barre conductrice (20) peut être introduite par rapport au profilé chapeau (9) par le haut dans les coulisses (52) de la contre-barre de liaison (22).

3. Connecteur selon la revendication 1 ou 2, **caractérisé en ce que** les paliers (33) sont formés essentiellement en Z.

4. Connecteur selon une des revendications précédentes, **caractérisé en ce que** la portion de barre conductrice (20) présente un coude (23) et un rail de raccordement (24) appliqué ou façonné contre celui-ci.

5. Connecteur selon une des revendications précédentes, **caractérisé en ce que** la portion de barre conductrice (20) présente une traverse centrale (26) contre laquelle sont formées deux branches de barre conductrice externes (28a, 28b).

6. Connecteur selon une des revendications précédentes, **caractérisé en ce que** les branches de barre conductrice (28a, 28b) comportent des paliers (33) en forme de Z.

7. Connecteur selon une des revendications précédentes, **caractérisé en ce que** la contre-barre de liaison (22) comprend une traverse centrale (42) contre laquelle sont formées les branches latérales de contre-barre de liaison (44a, 44b), qui s'étendent essentiellement parallèlement aux branches de barre conductrice (28a, 28b) de la portion de barre conductrice (20).

8. Connecteur selon une des revendications précédentes, **caractérisé en ce que** les branches de contre-barre de liaison (44a, 44b) et les branches de barre conductrice (28a, 28b) sont situées à distance parallèlement les unes aux autres au moins par segments et entrent en contact les unes avec les autres dans la zone des paliers (33).

9. Connecteur selon une des revendications précédentes, **caractérisé en ce que** deux des coulisses (52) sont prévues, qui présentent des coudes (48a, 48b) qui sont alignés inclinés par rapport au plan du rail de support et sont munis de fentes (50a, 50b) dans lesquelles s'engagent les branches de barre conductrice (28a, 28b).

10. Connecteur selon une des revendications précédentes, **caractérisé en ce que** la portion de barre conductrice (20) et/ou la contre-barre de liaison (22) est/sont configurée(s) essentiellement comme des portions cintrées en tôle.

11. Connecteur selon une des revendications précédentes, **caractérisé en ce que** les branches de barre conductrice (28) et les coudes (32) sont munis respectivement d'ergots de contact (36a, 36b) alignés entre eux.
